# EUROPEAN PATENT SPECIFICATION

(11) **EP 4 069 813 B1**
(45) Date of publication and mention of the grant of the patent: **13.09.2023**
(21) Application number: 20797498.1
(22) Date of filing: 02.11.2020
(51) Int. Cl.: C11D 17/04, B65D 65/46

(54) **BIODEGRADABLE PACKAGE CONTAINING WATER-SOLUBLE CAPSULES**
BIOLOGISCH ABBAUBARE VERPACKUNG MIT WASSERLÖSLICHEN KAPSELN
EMBALLAGE BIODÉGRADABLE CONTENANT DES CAPSULES SOLUBLES DANS L'EAU

(30) Priority: 05.12.2019 EP 19213928
(43) Date of publication of application: 12.10.2022
(73) Proprietor: Unilever IP Holdings B.V., 3013 AL Rotterdam (NL); Unilever Global IP Limited, Wirral, Merseyside CH62 4ZD (GB)
(72) Inventor: PARRY, Alyn, James, Wirral Merseyside CH63 3JW (GB)
(74) Representative: Newbould, Frazer Anthony
(86) International application number: PCT/EP2020/080708
(87) International publication number: WO 2021/110337

(56) References cited:
- EP-A1- 3 026 102
- EP-A1- 3 279 306
- WO-A1-02/20361
- WO-A1-2016/198978
- US-A1- 2012 107 534
- US-A1- 2015 252 305
- US-A1- 2019 256 265

## Description

This invention relates to a product comprising bulk quantities of laundry or machine dish wash water-soluble capsules made from water-soluble film, contained in biodegradable packaging. WO02/20361-A1 discloses cardboard packages for containing or dispensing laundry unit doses. Multi-compartment water-soluble detergent capsules made with water-soluble film are known. The water soluble-film is typically polyvinyl alcohol.

Whilst water soluble capsules are highly convenient, they are subject to the problem of leakage due to imperfect sealing during high speed manufacturing. This can lead to leakage of the formulation from the capsule chamber.

The problem is excabertated with performance laundry or machine dish wash treatment capsules which have high fill levels of liquid. The higher fill volume results in a greater stretch imposed on the water-soluble and provides a capsule with a bulbous, convex outer profile as the first and second sheets bulge out and stretch under the pressure. This fill level whilst pleasing to the consumer is potentially problematic as the stretching puts stress on any seals which can cause leakage from the capsule. At the same time, to offer value for money, manufacturers market bulk quantities of the capsules, which increases the transit forces on vulnerable capsules.

It may also be desirable to limit access to the capsules particularly with respect to children, by incorporating child resistent features into the packaging. Current capsules are generally packaged in plastic tubs or plastic bags. It is impervious to water and the contained formulations. Rigid packacing may currently be recycled, however there is an environmental need to reduce the use of plastic. Compostable or biodegradable material offers environmental advantages, however due to its very nature (is tendancy to biodegrade) the use of such materials is problematic for child safety features. If capsules leak from e.g. an imperfect seal, the packaging can become weakened by premature degradation of the biodegradable material if this comes into direct contact with leaked formulation. The mechanical properties of the pack are compromised. Under the weight of bulk quantities of capsules, and the likely egress of moisture from the capsules, the integrity of any child resistent closures can be compromised. The pack may thus become more accessible to children which is undesirable.

The present application and the proposals herein seek to address one or more of the problems noted above and/or seek to provide biodegradable packaging arrangements for bulk quantities of high performance water soluble capsules containing substrate treatment formulations, especially in connection with the needs of balancing child resistent closures, consumer experience and maintaining capsule integrity.

In one aspect the present application provides a substrate treatment product comprising a package comprising at least one layer of fibrous or pulp material and at least one layer of a polymeric material selected from polylactic acid, polyhydroxyalkanoate, a polyester, polybutylenadipate terephthalate, a cellulose based material, a starch based material, a sugare cane based material and mixtures thereof, and the packaging containing a plurality of water-soluble capsules, each water-soluble capsule comprising a substrate treatment composition within a sealed compartment which is filled to at least 60% of the volume of the compartment, the package comprising (i) a receptacle containing 10 or more of said water soluble capsules and a closure; (ii) a child resistent closure mechanism comprising a first locking member on the receptacle and a second locking member present on the closure whereby the members interlock; wherein the substrate treatment composition has a viscosity in the range 200 mPa.s - 2000 mPa.s at 25°C at a shear rate of 21 sec⁻¹, wherein the water soluble capsule comprises a water soluble film comprising polyvinyl alcohol, a modified polyvinyl alcohol, polyvinyl acetate, carboxymethylcellulose or hydroxypropyl methyl cellulose and wherein the water content of the substrate treatment composition is in the range 0.01 - 15%wt. based on the total weight of the composition.

With this arrangement, water soluble capsules with performance levels of substrate treatment liquid can be filled at speed and packaged in large quantities to reduce manufacturing costs but can be packaged using biodegradable materials and still minimizing deleterious effects leaking capsules. This is suprising considering the similarity in the compositions forming the capsule film and also the polymers used in the biodegradable packaging.

The selected range of viscosity is ensures filling times do not slow manufacturing times so as to render the capsules too costly. At the same time, the applicants have found if the liquid is thickened to a viscosity as specified in the first aspect of the invention, this minimizes splashing of the capsule seal areas and also minimizes the formation of waves (in the formulation) which might also affect the seal integrity, as the capsules are filled at high speed.

As used throughout this specification including the claims, the folowing terms are defined: articles **"a"** and **"an"** when used in a claim, are understood to mean one or more of what is claimed or described.

**"ambient-active"** in the context of enzymatic compositions, is intended to mean active at temperature no more than 40°C, preferably no more than 30°C, more preferably no more than 25°C most preferably no more than 15°C but always greater than 1 degree Celcius and "active" means effective in achieving stain removal, also defined herein.

**"Biodegradable"** means the complete breakdown of a substance by microorganisms to carbon dioxide water biomass, and inorganic materials.

**"Child resistant closure mechanism"** refers to any mechanism whereby access to the water soluble capsules is reduced so that the water soluble cannot be readily removed, by infants and children. This preferably comprises any suitable arrangement that requires individuals to perform multiple cognitive and manipulative steps to open so as to prevent a child from inadvertently accessing the capsules.

**"Compostable"** means a material that meets the following three requirements: (1) is capable of being processed in a composting facility for solid waste; (2) if so processed will end up in the final compost; and (3) if the compost is used in the soil the material will ultimately biodegrade in the soil.

**"Enzyme"** includes enzyme variants (produced, for example, by recombinant techniques). Examples of such enzyme variants are disclosed, e.g., in EP 251,446 (Genencor), WO 91/00345 (Novo Nordisk), EP 525,610 (Solvay) and WO 94/02618 (Gist-Brocades NV).

**"Essentially free of a component"** means that no amount of that component is deliberately incorporated into the composition.

**"Film"** refers to a water soluble material and may be be sheet-like material. The length and width of the material may far exceed the thickness of the material, however the film may be of any thickness.

**"Petro-based polyolefin"** refers to a polyolefin derived from petroleum, natural gas, or coal via intermediate olefin precursors.

**"Petrochemical"** refers to an organic compound derived from petroleum, natural gas, or coal.

**"Polymer"** refers to a macromolecule comprising repeat units where the macromolecule has a molecular weight of at least 1000 Daltons. The polymer may be a homopolymer, copolymer, terpoymer etc.

**"Renewable"** refers to a material that can be produced or is derivable from a natural source which is periodically (e.g., annually or perennially) replenished through the actions of plants of terrestrial, aquatic or oceanic ecosystems (e.g., agricultural crops, edible and non-edible grasses, forest products, seaweed, or algae), or microorganisms (e.g., bacteria, fungi, or yeast).

**"Renewable resource"** refers to a natural resource that can be replenished within a 100 year time frame. The resource may be replenished naturally, or via agricultural techniques. Renewable resources include plants, animals, fish, bacteria, fungi, and forestry products. They may be naturally occurring, hybrids, or genetically engineered organisms. Natural resources such as crude oil, coal, and peat which take longer than 100 years to form are not considered to be renewable resources.

**"Stain removal"** is measured in terms of Remission units or a Remission index. "Stain removal" is preferably shown when there is a remission equal to or greater than 2 Remission units and more preferably greater or equal to 5 units. This is represents effective stain removal for a visible (by the human eye) effect.

**"Substrate"** mean any suitable substrate inclduing fabric articles or garments, bedding, towels etc., and dishes, where "dishes" is used herein in a generic sense, and encompasses essentially any items which may be found in a dishwashing load, including crockery chinaware, glassware, plasticware, hollowware and cutlery, including silverware.

**"Substrate treatment composition"** means any type of treatment composition for which it is desirable to provide a dose thereof in a water-soluble and is designed for treating a substrate as defined herein. Such compositions may include, but are not limited to, laundry cleaning compositions, fabric softening compositions, fabric enhancing compositions, fabric freshening compositions, laundry prewashing compositions, laundry pretreating compositions, laundry additives (e.g., rinse additives, wash additives, etc.), post-rinse fabric treatment compositions, dry cleaning compositions, ironing aid, dish washing compositions, hard surface cleaning compositions, and other suitable compositions that may be apparent to one skilled in the art in view of the teachings herein.

**"Treatment"** in the context of enzymatic fabric treatment composition preferably means cleaning and more preferably stain removal.

**"Thermoforming"** means a process in which the film is deformed by heat, and in particular it may involve the following: a first sheet of film is subjected to a moulding process to form an enclosure in the film e.g. forming a recess in the film. Preferably this involves heating prior to deformation. The deformation step is preferably enabled by laying the film over a cavity and applying a vacuum or an under pressure inside the cavity (to hold the film in the cavity). The recesses may then be filled. The process may then include overlaying a second sheet over the filled recesses and sealing it to the first sheet of film around the edges of the recesses to form a flat sealing web, thus forming a capsule which may be a unit dose product. The second film may be thermoformed during manufacture. Alternatively the second film may not be thermoformed during manufacture. Preferably, the first water-soluble film is thermoformed during manufacture of the unit dose article and the second water-soluble film is not thermoformed during manufacture of the unit dose article.

**"Unit dose"** means an amount of composition suitable to treat one load of laundry, such as, for example, from about 0.05 g to about 100 g, or from 10 g to about 60 g, or from about 20 g to about 40 g.

**"Water-soluble"** means the article (film or package) dissolves in water at 20°C.

Unless otherwise noted, all component or composition levels are in reference to the active portion of that component or composition, and are exclusive of impurities, for example, residual solvents or by-products, which may be present in commercially available sources of such components or compositions.

Except in the examples and comparative experiments, or where otherwise explicitly indicated, all numbers are to be understood as modified by the word "about". All percentages ( expressed as "%") and ratios contained herein are calculated by weight unless otherwise indicated. All conditions herein are at 20° C. and under the atmospheric pressure, unless otherwise specifically stated. All polymer molecular weights are determined by weight average number molecular weight unless otherwise specifically noted.

Numerical ranges expressed in the format "from x to y" are understood to include x and y. When for a specific feature multiple preferred ranges are described in the format "from x to y", it is understood that all ranges combining the different endpoints are also contemplated. In specifying any range of values or amounts, any particular upper value or amount can be associated with any particular lower value or amount.

Preferably the substrate composition utilised in the invention has an aqueous continuous phase. By "aqueous continuous phase" is meant a continuous phase which has water as its basis however to reduce the problem of premature biodegradation it is essential that the composition utilised in the invention comprises a water content less than 15%wt. The water content is preferably in the range 0.01 - 15%wt. more preferably 0.1 - 10%wt water, even more preferably 0.1 - 8%wt water (where percentage %wt. means it is weight based on the total weight of the composition) most preferably 0.1 - 7% water.

To reduce the effects of any leakage and yet still have a processable capsule, it is essential that the substrate treatment viscosity is in the range of 200 mPa.s - 2000 mPa.s at 25°C at a shear rate of 21 sec⁻¹ , preferably 250 - 1500 more preferably 350 - 1000.

The term "liquid" in the context of this invention denotes that a continuous phase or predominant part of the composition is liquid and that the composition is flowable at 15°C and above.

The detergent composition may contain a bleach system. This preferably consists of an air bleaching catalyst. For example the catalyst being a ligand of the formula (I) complexed with a transition metal, selected from Fe(ll) and Fe(III),

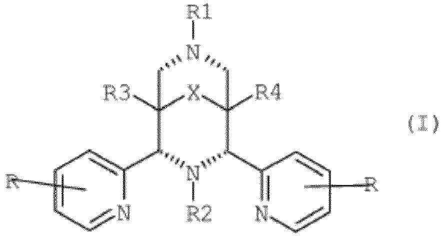

Where R1 and R2 are independently selected from:
C1-C4-alkyl,
C6-C10-aryl, and,
a group containing a heteroatom capable of coordinating to a transition metal, wherein at least one of R1 and R2 is the group containing the heteroatom; preferably at least one of R1 or R2 is pyridin-2-ylmethyl. More preferably the catalyst is one in which R1 is pyridin-2-ylmethyl. Most preferably R1 is pyridin-2-ylmethyl and R2 is methyl;
R3 and R4 are independently selected from hydrogen, C1-C8 alkyl, C1-C8-alkylene-O-C1-C8-alkyl, C1-C8-alkylene-O-C6-C10-aryl, C6-C10-aryl, C1-C8-hydroxyalkyl, and - (CH2)nC(O)OR5;
wherein R5 is independently selected from: hydrogen, C1-C4-alkyl, n is from 0 to 4, and mixtures thereof; preferably R3=R4= -C(O)OMe and,
each R is independently selected from: hydrogen, F, Cl, Br, hydroxyl, C1-C4-alkyO-, -NH-CO-H, -NH-CO-C1-C4-alkyl, -NH2, -NH-C1-C4-alkyl, and C1-C4-alkyl; preferably each R is hydrogen,
X is selected from C=O, -[C(R6)2]y- wherein Y is from 0 to 3, preferably 1, each R6 is independently selected from hydrogen, hydroxyl, C1-C4-alkoxy and C1-C4-alkyl preferably X is C=O.

Most preferably the catalyst is ([Fe(N2py3o)CI]CI) with structure (II):

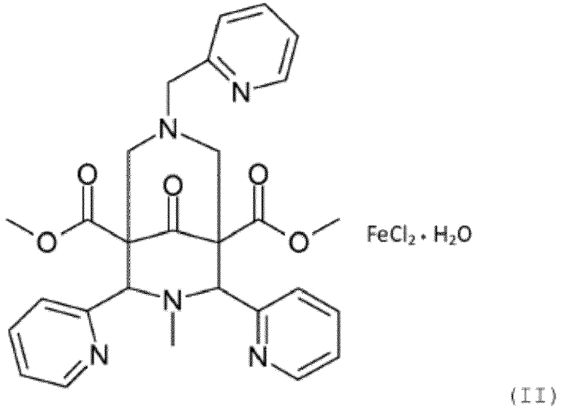

Also known as Iron(1+), chloro[rel-1,5-dimethyl (1 R,2S,4R,5S)-9,9-dihydroxy-3-methyl-2,4-di(2-pyridinyl-kN)-7-[(2-pyridinyl-kN )methyl]-3,7-diazabicyclo[3.3.1]nonane-1,5-dicarboxylate-kN3, kN7]-, chloride (1:1), (OC-6-63)[CAS Registry Number 478945-46-9].

To avoid possible gassing of ingredients it is preferred to avoid the use of persalt or peracid bleaching species in the capsules.

The presence of bleaching agents greatly enhances cleaning e.g. stain removal however they may be incompatible with the biodegradable material in that they may accelerate biodegedration if allowed to contact such material e.g. in the event of leakage. The invention is highly advantageous where such bleach systems are incorporated.

Compositions preferably comprise an effective amount of one or more enzyme selected from the group comprising, pectate lyase, protease, amylase, cellulase, lipase, mannanase and mixtures thereof. The enzymes are preferably present with corresponding enzyme stabilizers.

The presence of enzymes greatly enhances cleaning e.g. stain removal however enzymes may be incompatible with the biodegradable material in that they may accelerate biodegedration if allowed to contact such material e.g. in the event of leakage. The invention is highly advantageous where such enzymes are incorporated.

The enzymes may be ambient active. The enzymes are preferably present at 0.001 - 5% wt more preferably 0.01 - 3%.

A composition of the invention may comprise one or more polymeric thickeners. Suitable polymeric thickeners for use in the invention include hydrophobically modified alkali swellable emulsion (HASE) copolymers. Exemplary HASE copolymers for use in the invention include linear or crosslinked copolymers that are prepared by the addition polymerization of a monomer mixture including at least one acidic vinyl monomer, such as (meth)acrylic acid (i.e. methacrylic acid and/or acrylic acid); and at least one associative monomer. The term "associative monomer" in the context of this invention denotes a monomer having an ethylenically unsaturated section (for addition polymerization with the other monomers in the mixture) and a hydrophobic section. A preferred type of associative monomer includes a polyoxyalkylene section between the ethylenically unsaturated section and the hydrophobic section. Preferred HASE copolymers for use in the invention include linear or crosslinked copolymers that are prepared by the addition polymerization of (meth)acrylic acid with (i) at least one associative monomer selected from linear or branched C₈-C₄₀ alkyl (preferably linear C₁₂-C₂₂ alkyl) polyethoxylated (meth)acrylates; and (ii) at least one further monomer selected from C₁-C₄ alkyl (meth) acrylates, polyacidic vinyl monomers (such as maleic acid, maleic anhydride and/or salts thereof) and mixtures thereof. The polyethoxylated portion of the associative monomer (i) generally comprises about 5 to about 100, preferably about 10 to about 80, and more preferably about 15 to about 60 oxyethylene repeating units.

When included, a composition of the invention will preferably comprise from 0.1 to 5% (by weight based on the total weight of the composition) of one or more polymeric thickeners such as, for example, the HASE copolymers which are described above.

Compositions of the invention may have their rheology further modified by use of one or more external structurants which form a structuring network within the composition. Examples of such materials include hydrogenated castor oil, microfibrous cellulose and citrus pulp fibre.

The detergent composition may comprise one or more organic surfactants. Many suitable detergent-active compounds are available and are fully described in the literature, for example, in "Surface-Active Agents and Detergents", Volumes I and II, by Schwartz, Perry and Berch. The organic surfactant may be anionic (soap or non-soap), cationic, zwitterionic, amphoteric, nonionic or mixture of two or more of these. The preferred organic surfactants are mixtures of soap, synthetic non-soap anionic and non ionic compounds optionally with amphoteric surfactant.

Anionic surfactant may be present in an amount from 0.5 to 50 wt%, preferably from 2 wt% or 4 wt% up to 30 wt% or 40 wt% of the detergent composition. Suitable examples include alkyl benzene sulphonates, particularly sodium linear alkyl benzene sulphonates having an alkyl chain length of C5-C15; olefin sulphonates; alkane sulphonates; dialkyl sulphosuccinates; and fatty acid ester sulphonates.

Suitable nonionic surfactant compounds include in particular the reaction products of compounds having a hydrophobic group and a reactive hydrogen atom, for example, aliphatic alcohols, acids, amides or alkyl phenols with alkylene oxides, especially ethylene oxide. Specific nonionic surfactant compounds are alkyl (C8-22 ) phenol-ethylene oxide condensates, the condensation products of linear or branched aliphatic C8-20 primary or secondary alcohols with ethylene oxide, and products made by condensation of ethylene oxide with the reaction products of propylene oxide and ethylene-diamine.

In a substrate washing detergent composition, these organic surfactants preferably comprise 5 to 50 wt% of the detergent composition. In a machine dishwashing composition, organic surfactant is likely to constitute from 0.5 to 8 wt% of the detergent composition and preferably consists of nonionic surfactant, either alone or in a mixture with anionic surfactant.

The detergent compositions may contain a so-called detergency builder which serves to remove or sequester calcium and/or magnesium ions in the water. Soluble builder may be added to the liquid composition. For example sodium citrate or a soluble sequestrant, for example, Dequest 2066, which may also assist with stabilising the liquid.

The builder or sequestrant material is preferably fully soluble so as to eliminate the possibility of unwanted and unsightly residues on substrates. For that reason Alkali metal aluminosilicates are not favoured.

Non-phosphorus water-soluble detergency builders may be organic or inorganic. Inorganic builders that may be present include alkali metal (generally sodium) carbonate; while organic builders include polycarboxylate polymers, such as polyacrylates, acrylic/maleic copolymers, and acrylic phosphonates, monomeric polycarboxylates such as citrates, gluconates, oxydisuccinates, glycerol mono- di and trisuccinates, carboxymethyloxysuccinates, carboxymethyloxymalonates, dipicolinates and hydroxyethyliminodiacetates. Electrolytes such as sodium carbonate are not preferred due to the way they suppress the solubility of polyvinylalcohol.

The compositions may also contain hueing dyes, perfumes, perfume microcapsules, chelants, silicones, polyolefin waxes, latexes, oily sugar derivatives, cationic polysaccharides, anti-foaming agents, polyurethanes, fatty acids, antioxidants, opacifier, pearlescent agent, antiredeposition agents, substrate-softening agents, deposition aid, builder, organic shine polymers, surface modifying polymers, metal care agents, metal salts, anti-corrosion agents and mixtures thereof.

Rigid packaging is preferred for bulk quantities of capsules. The rigid packaging preferably has a minimum compression strength of 300N. The thickness (or caliper) of material will be chosen to provide the necessary structural rigidity to the package.

The packaging may comprise any suitable rigid structure, such as a tub or carton or box, tubular structure, or bottle.

The walls of such structures may be foamed, moulded. It may comprise laminate structures (e.g. built up in layers ). It may comprise fibrous material such as fibres/pulp which is glued, compressed and/or enclosed in stiff walls. Fluting may be incorporated e.g. corrugated paper board. For paperboard, the grammage is preferably at least 200gsm (grams per square meter) preferably at least 225 gsm.

The structure may be foldable between an erected structure to provide a functioning receptacle and a flattened structure which assists in transporation and ease of disposal later so that mulitple packs could be flattened and stacked ready for transport to a biodegradation site.

The biodegradable packaging may comprise a combination of a fibrous and/or pulp material and a polymeric material. One example may be a material comprises one or more fibrous and/or pulp layers in combination with one or more polymeric materials (all materials being biodegradable). There may be one or more layers of fibre and/or pulp sandwiched between layers of polymeric material. The material may be virgin or recycled.

The invention includes a child resistent closure mechanism comprising a first locking member on the receptacle and a second locking member present on the closure whereby the members interlock.

The child resistent closure is obtained by specific structures to secure the closure in place (closing the receptacle) until a specific operation is carried out to disengage the closure.

Closures may include tops and lids with respective locking members that must be lined up in a certain orientation before they will release from locking members on the receptacle, or that require the performance of a certain sequence of steps or actions to actuate their release as described below.

The receptacle and closure may each incorporate at least one, and preferably at least two such locking members, and the package closed by the locking of mulitple pairs of locking members, each pair comprising one locking member on the closure inter-engaging with one locking member from the receptacle. Preferably each pair of locking members are operable independent of any at least one other pair of locking members, such that unlocking of one pair does not automatically unlock the other pair. Preferably, at least one pair are spaced apart from another pair at locations on the package, so for example, they may be located at diagonally opposed positions e.g. at or adjacent diagonally opposed edges/corners of a generally square/rectangular closure and/or at diametrically opposed positions on the edge of a circular closure.

Preferably the or each locking member comprises a resilient part so that it springs into and/or out of a locking engagement with a respective locking member.

Locking members may be selected from any projection and corresponding recess, catches, clips, latches, flaps, straps, hook and loop fastnerers, ratchet arrangements or lugs (on screw-threads), sliding arrangements, buttons, pull-tabs, keys, magnets or other locking component. Locking members may be biased e.g. spring loaded in the locking position (engaged with a respective locking member) so that pressure must be used to release them from each other.

The receptacle and closure may be attached to each other by a hinge or they may slide relative to each other and may even be unitary (e.g. with a living hinge) so that the closure is integral with the receptacle. The invention is particular preferred for such arrangements as softening the receptacle may result in mis-shaping and place stresses on the closure.

The specific operation may comprise a double and/or coordinated action on the closure. Preferably the child resistant closure is comprises locking members requiring double and/or co-ordinated action to open said closure. So for example the action required may be press-and-turn or press-and-pull mechanisms as are known by the person skilled in the art. For example the closure may be opened only when the closure or a part thereof, is both squeezed (radially) and rotated, or pushed (axially of the package) and rotated. Child resistent closures may comprise gripping or squeezing both sides of the closure and rotating at the same time to remove the closure. The closure may be retained on the receptable by respective internal threads carrying ratchets or wedge shaped lugs as locking members, and prevent the closure from being unscrewed from the neck opening unless the closure and/or neck is flexed diametrically whereby the locking members move apart in a radial direction and allow the closure being unscrewed.

Locking members may require a double and/or coodinated action to be unlocked. For example the packaging for example, press and slide, or press and pull. A removable locking key may be required to lock and/or unlock said interlocking members.

The package may comprises a sliding mechanism whereby the closure or at part thereof slides relative to the receptable or the receptacle slides within a closure (e.g. as a tray pack arrangement whereby capsules are stacked on the tray part) and there is provided at least one locking mechanism configured to lock the inner sliding part relative to an outer part of the packaging. The locking mechanism may be biased so that pressure must be exerted to release the tray. In some implementations, the inner sleeve includes a pull tab for removal of the inner sleeve from inside the outer sleeve.

Locking members may be arranged spatially to prevent child access. For example at least 2 pairs may be separated from each other by a distance corresponding to the average span between a thumb and forefinger of the hand of an adult. Only when all both pairs are released simultaneously it is possible to open the lid of the packaging container.

For box constructions, preferably the locking members are located at diagonally opposed corners of the box.

The child resistent closure may produce audible feedback such as a 'click' to signal to the user that the closure is in place.

The package preferably comprises a biodegradable material. The biodegradable material may comprise a biodegradable polymer. The packaging may comprise entirely biodegradable material such that the package in its entirety can be completely broken down of a substance by microorganisms such as bacteria, fungi, yeasts, and algae; environmental heat, moisture, or other environmental factors to carbon dioxide water biomass, and inorganic material.

If desired, the extent of biodegradability may be determined according to e.g. ASTM Test Method 5338.92.

Suitable biodegradable materials comprises paper, card or board from cellulose or derivatves; and may optionally comprise lignin or derivatives; biodegradable plastics, such as bioplastics which are preferably oxo-biodegradable plastics wherein biodegradation results from oxidative and cell-mediated phenomena, either simultaneously or successively (as distinct from oxo-degradation which is degradation resulting from "oxidative cleavage of macromolecules" such that the plastic fragments but does not biodegrade except over a very long time). The material may also be compostable.

The biodegradable material comprises a bio polymer such as polylactic acid (PLA) which may be from e.g. corn starch, cassava, sugarcan etc; polyhydroxyalkanoate (PHA) including include poly-3-hydroxybutyrate (PHB or PH3B), polyhydroxyvalerate (PHV), and polyhydroxyhexanoate (PHH). A PHA copolymer called poly(3-hydroxybutyrate-co-3-hydroxyvalerate) (PHBV); biodegradable polyesters e.g. polycaprolactone (PCL), Polybutylensuccinat (PBS) polyvinylalcohol (PVA); polybutylenadipate-terephthalate (PBAT); cellulose based materials e.g. ethyl cellulose, cellulose acetate (true) Cellophane (made from wood, cotton or hemp); starch or starch based materials (from potato, rice, corn etc); sugar cane bagasse, and any combination or mixture thereof. For example PCL may be mixed with starch to improve biodegradability of the PCL.

The biodegradable material may comprise any biodegradable polyolefin. Biodegradable petroleum based plastics inlcude: polyglycolic acid (PGA), a thermoplastic polymer and an aliphatic polyester; polybutylene succinate (PBS), which is a thermoplastic polymer resin that has properties comparable to propylene; polycaprolactone (PCL), as this has hydrolysable ester linkages offering biodegradable properties. It has been shown that firmicutes and proteobacteria can degrade PCL. Penicillium sp. strain 26-1 can degrade high density PCL; though not as quickly as thermotolerant Aspergillus sp. strain ST-01. Species of clostridium can degrade PCL under anaerobic conditions; Polybutylene adipate terephthalate (PBAT) which is a biodegradable random copolymer.

Preferably the biodegradable material is bio-based according to ¹⁴C or radiocarbon method (EU: EN 16640 or CEN/TS 16137, International: ISO 16620-2, US: ASTM 6866). Preferably the biodegradable material is made from a renewable resource.

The packaging material may comprise an outer layer to provide additional protection or sheen (for biodegradable materials with a matt finish such as paper board) . This layer preferably comprises a biodegradable polymer coating or varnish or film. Preferably the outer layer comprises any of the bio polymers described above. Preferaby the outer layer is at least present on some or all of the internal surfaces of the receptable.

Preferably the biodegradable material or any coating may comprise a bittering agent such as Bitrex to discourage children from exploring the packaging. This is preferable for the the external surface of the child concious closure. The bittering agent may be present in a biodegradable polymer coating which is present on at least the external surfaces of the closure.

Bittering agents are generally known. In some embodiments, the bittering agent is selected from benzoic benzylamine amide, denatonium benzoate, denatonium saccharide, trichloroanisole, methyl anthranilate and quinine (and salts of quinine). Further examples of bittering agents include naringin, sucrose octaacetate and agents derived from plant or vegetable matter, such as chemical compounds derived from chilli pepper plants, those derived from a plant species of the genus cynaro, alkaloids and amino acids.

In some embodiments, the bittering agent is selected from the group consisting of denatonium benzoate, denatonium saccharide, quinine or a salt of quinine. The chemical name of denatonium is phenylmethyl-[2-[(2,6-dimethylphenyl)amino]-2-oxoethyl]-diethylammonium. In particular embodiments, the bittering agent is denatonium benzoate or denatonium saccharide.

The bittering agent is typically incorporated within the packaging material or film-coated on surfaces of the package.

The bittering agent may be present in the packaging material in a range of 100 to 5000 ppm, preferably 200 to 3000 ppm, more preferably 500 to 2000 ppm, based on the weights of the bittering agent and packaging substrate. For example, 1 mg of bittering agent may be incorporated into 1 g of biodegradable bio film ( used as a coating to e.g. cardboard) to provide the bittering agent at 1000 ppm.

Film-coating of a bittering agent on the surface of a substrate can be performed by known techniques, such as spraying or printing of a bittering agent solution onto the surface of the substrate.

Preferably the pack comprises a dimensionally stable tear-resistent planar material (e.g. laminate) such a dimensionally stable tear-resistant paperboard laminate for making a tear-resistant packaging structure. The dimensionally stable tear-resistant paperboard laminate may include includes a tear-resistant biodegradable polymer core layer having first and second opposite sides. The dimensionally stable tear-resistant paperboard laminate further includes a first paperboard layer bonded to the first side of said tear-resistant polymer core layer, with a first bonding medium. The dimensionally stable tear-resistant paperboard laminate further includes a second paperboard layer bonded to the second side of the tear-resistant polymer core layer, with a second bonding medium. The tear-resistant polymer core layer has a thickness of at least 1 mil and a tear resistance of at least 350 grams of force in machine direction and of at least 400 grams of force in cross direction, as measured by the Elmendorf tear propagation test, as measured by the Elmendorf tear propagation test. Moreover, the first and second paperboard layers are substantially structurally identical.

Preferably, the tear-resistant polymer core layer has a thickness of approximately 3 mils and a tear resistance of about 1700 grams of force in machine direction and about 400 grams of force in cross direction, as measured by the Elmendorf tear propagation test.

Volume is conveniently calculated based on the volume of the corresponding cavity in the mould used to make the capsule. Volume includes both laundry / machine dish wash composition and any air or other gas that may be present (e.g. arising from headspace from the fill process). The compartments of the capsule will be filled with the substrate treatment composition.

By "filled" it is meant that the compartment contains liquid and possibly also a gas bubble. The presence of the gas bubble provides some protection from compression of the compartment due to its compressibility. The gas is preferably air trapped in the compartment during manufacture.

In embodiments each compartment volume is ≥ 5ml, ≥ 10ml, suitably ≥ 12ml, ≥ 14ml, ≥ 16ml, or ≥17ml. In embodiments, the total compartment volume (total volume of all compartments) is ≥10ml, ≥15ml, ≥20ml, ≥22ml, ≥24ml, ≥26ml or ≥28ml. In embodiments the total compartment volume (total volume of all compartments) is ≤ 40ml, ≤ 38ml, ≤ 36ml, ≤ 34ml, ≤ 32ml, ≤ 30ml, ≤ 28ml, ≤ 26ml or ≤ 25ml. In embodiments the total compartment volume (total volume of all compartments) is in the range 15 to 36ml, 20 to 36ml, 22 to 36ml, 24 to 34ml, 28 to 32 ml, or 22 to 26ml.

Regarding the extent of fill (fill level), the amount of treatment composition as a % of total volume of any given compartment is at least 60%, suitably at least 70%, 80% or 90%, and preferably at least 92%, more preferably 94%, even more preferably 96% and most preferably 98%. Suitably the % is substantially the same for all compartments. Fill volume vs. brimful volume is aimed at a minimum of 80%. For example, for a 28 ml liquid fill the cavity volume is thus at most 35 ml.

The combination of high performance fill levels capsules means that the capsule film can become stretched and vulnerable.

Preferably the height (h) of each capsule is 20 mm or less. Preferably both the width (w) and the length (I) of each capsule is greater than 31 mm. Preferably has an **effective diameter** of ≥ 31 mm. To determine the diameter, the capsule is placed inside a cylinder having an internal dimension of 31mm without compression. If it fits entirely within the chamber it will be < 31 mm.

Preferably, for consumer value and convenience, packages contain sufficient numbers of capsules, which is 10 or more capsules, more preferably 20 or more capsules, even more preferably 30 or more capsules, even more preferably 40 or more capsules and more preferably 50 or more capsules. There may be no more than 70 capsules in the package, preferably no more than 60 capsules.

Capsules are stacked or piled in packaging. Higher numbers of capsules per pack lowers manufacturing costs and price for the consumer, but increases the weight of the pack and the weight force experienced by each capsule which is not at the top of any stack or pile within the pack. The invention is particularly advantageous for such capsules, by minimizing leakage.

Preferably the mass (m) of each capsule is in the range 5g < m ≤ 30g preferably 10g < m < 30g. The package comprises at least 20 capsules, preferably at least 30 capsules, more preferably at least 40, even more preferably at least 50 and up to 100 capsules in one package. As the weight of each capsule increases, so will the force exerted by the capsules on the package also increases. Thus maintained rigidtiy is more and more important.

Each capsule may comprise two sheets of water-soluble film, the two sheets of film being sealed together by a seal (known as a sealing web) extending around the periphery of the capsule.

Preferably the capsule further comprises an internal seal which partitions the capsule to provide said at least two compartments. This can increase the sealing area for each capsule, and in turn increases the risk of seal contamination during filling. The invention is particular advantageous for such capsules.

All compartments are filled with a liquid or gel. However, additional compartments may also be filled with gels, powders or any combination thereof. So, for example, some capsules may have a liquid-containing compartment and a powder-containing compartment, or there may be liquid-gel, gel-powder combinations (each form e.g. liquid, gel, powder in a different compartment).

Suitable compositions that may be split into different components for use in the present invention include those intended for laundry (substrate cleaning, softening and/or treatment) or machine dish washing.

The mulitple compartment capsules may comprise different parts of a treatment composition which, when combined, make up the full treatment composition. By that is meant that the formulation of each of the parts of the treatment composition is different either in its physical form (e.g. viscosity), its composition or, preferably its colour/opacity.

Preferably capsules are manufactured by forming, more preferably thermoforming a sheet or sheets of water-soluble film. During forming or thermoforming recesses in the film. The recesses are then filled and a second often thinner sheet superposed over the filled recesses and sealed it to the first sheet of film around the edges of the recesses to form a flat sealing web. Substrate treatment compositions of a viscosity above the range of the invention take longer to settle into the capsule recess after filling. If they have not settled by the time the second sheet is superposed and sealed, the second thinner sheet may be stretched over the piled up formulation which may comprise the film. This stretching can create leaks by exacerbating pin holes in the thin film. The viscosity range of the invention is thus particularly advantageous for such capsules.

Further more, relaxation of the first film typically then causes the applied second sheet to bulge out when the vacuum is released from the first sheet of film in the mould. This stretch

Suitable water-soluble substrate materials for the capsule film include one or more water-soluble polymers. In one embodiment, the water-soluble substrate includes polyvinyl alcohol, a modified polyvinyl alcohol, polyvinyl acetate, polyacrylates, water-soluble acrylate copolymers, polyaminopropyl sulfonic acid and salts thereof, polyitaconic acid and salts thereof, polyacrylamides, polyvinylpyrrolidone, pullalan, cellulosics (such as carboxymethylcellulose and hydroxypropyl methyl cellulose), water-soluble natural polymers (such as guar gum, xanthan gum, carrageenan and starch), water-soluble polymer derivatives (such as modified starches, including ethoxylated starch and hydroxylated propylstarch, poly(sodium acryloamido-2-methylpropane sulfonate, polymonomethylmaleate and salts thereof), copolymers thereof and combinations thereof. In some embodiments, the water-soluble substrate includes, or consists essentially of, polyvinyl alcohol, a modified polyvinyl alcohol, polyvinyl acetate, carboxymethylcellulose or hydroxypropyl methyl cellulose.

In particular embodiments, the water-soluble substrate includes, or consists essentially of, polyvinyl alcohol, polyvinyl acetate and/or a modified polyvinyl alcohol. Polyvinyl alcohol, polyvinyl acetate and modified polyvinyl alcohols can provide stable water-soluble substrates that have suitable dissolution rates.

The water-soluble substrate material may also contain one or more plasticizers. Examples of plasticizers include, but are not limited to glycerol, glycerin, diglycerin, ethylene glycol, diethylene glycol, triethylene glycol, tetraethylene glycol, monopropylene glycol, polyethylene glycol, neopentyl glycol, trimethylpropane polyether polyols, sorbitol, ethanolamines and mixtures thereof. Suitable films include Monosol M4045 and Monosol M8045 (75, 82, 88 & 90 micron) and Aicello PT films (PT 75 & 90).

The film is preferably from 40 to 150 micrometer thick.

The second film is typically of a similar type to that used for the first film, but slightly thinner. Thus, in embodiments, the second film is thinner than the first film. In embodiments the ratio of thickness of the first film to the thickness of the second film is from 1:1 to 2:1.

In embodiments the first film thickness (pre-thermoforming) is from 50 to 150 micrometer, from 60 to 120 micrometer, or from 80 to 100 micrometer. After capsule manufacture generally the average thickness of the first film will be from 30 to 90 micrometer, or from 40 to 80 micrometer.

In embodiments the second film thickness (pre-thermoforming) is from 20 to 100 micrometer, from 25 to 80 micrometer, or from 30 to 60 micrometer.

The multi-compartment capsule is produced by a process of thermoforming. Such a process may advantageously comprise the following steps to form the capsule:
(a) placing a first sheet of water-soluble polyvinyl alcohol film over a mould having sets of cavities, each set comprising at least two cavities arranged side-by-side;
(b) heating and applying vacuum to the film to mould the film into the cavities and hold it in place to form corresponding recesses in the film;
(c) filling the different parts of a substrate treatment composition, each of which may have a different colour/opacity (as well as different treatment function) into the side and central recesses, the parts together forming a full detergent composition;
(d) sealing a second sheet of film to the first sheet of film across the formed recesses to produce a multi-compartment capsule having compartments located on opposite connected to each other and separated by a continuous internal sealing web;
(e) cutting between the capsules so that a series of multi-compartment compartment capsules are formed, each capsule containing a part of a treatment composition in multiple compartments (one central and two side compartments).

Sealing can be done by any suitable method for example heat-sealing, solvent sealing or UV sealing or ultra-sound sealing or any combination thereof. Particularly preferred is water-sealing. Water sealing may be carried out by applying moisture to the second sheet of film before it is sealed to the first sheet of film to form the seal areas.

A preferred thermoforming process uses a rotary drum on which the forming cavities are mounted. A vacuum thermoforming machine that uses such a drum is available from Cloud LLC. The capsules according to the invention could also be made by thermoforming on a linear array of cavity sections. Machines suitable for that type of process are available from Hoefliger. The following example description is focussed onto the rotary process. A skilled person will appreciate how this would be adapted without inventive effort to use a linear array process.

The water-soluble package of the present invention includes a bittering agent. Bittering agents are generally known. The bittering agents may be any of those described for the packaging.

The bittering agent is typically incorporated within or film-coated on the exterior surface of the water-soluble package. Additionally or alternatively, the bitter agent is included in the water-soluble package as a powdered bittering agent in a powder coating applied to the exterior surface of the water-soluble package.

In particular embodiments, the bittering agent is incorporated within (included in) the water-soluble substrate. For example, the bittering agent may be incorporated into the matrix of a water-soluble polymer included in the water-soluble substrate by dissolving the bittering agent in a water-soluble polymer solution before the water-soluble substrate is formed. The bittering agent may be present in water-soluble substrate material in a range of 100 to 5000 ppm, preferably 200 to 3000 ppm, more preferably 500 to 2000 ppm, based on the weights of the bittering agent and water-soluble substrate. For example, 1 mg of bittering agent may be incorporated into 1 g of water-soluble substrate to provide the bittering agent at 1000 ppm.

Film-coating of a bittering agent on the surface of the water-soluble substrate can be performed by known techniques, such as spraying or printing of a bittering agent solution onto the surface of the water-soluble substrate.

The bittering agent can be included in, film coated on and/or included in a powder coating on the exterior surface of the water-soluble substrate in one or more of the printed regions. There may be no adverse effects on the quality of UV-cured ink printed matter when the bittering agent is included in, film coated on and/or included in a powder coating on the exterior surface of the water-soluble substrate in the printed regions. In particular, there may be no adverse effects on the quality of UV-cured ink printed matter when the bittering agent is incorporated within the water-soluble substrate in the printed regions. In some embodiments, the bittering agent is incorporated within the water-soluble substrate homogenously. In this way, the inclusion of the bittering agent into the water-soluble substrate and printing of the water-soluble substrate can be simplified.

The printed water-soluble package can include a powder coating on an exterior surface of the water-soluble substrate. The powder coating can include a powdered bittering agent. Alternatively or additionally, the powder coating can include a powdered lubricating agent. The powder coating, when present, may coat the printed region or regions and/or the unprinted region or regions (if present) of the water-soluble substrate. In the printed regions of the water-soluble substrate, the powder coating may be indirectly on the exterior surface of the water-soluble substrate where there is a layer of UV-cured ink.

The powder coating, when present, typically is applied to at least 50% by area of the exterior surface of the water-soluble substrate. In some embodiments, the powder coating is applied to 60% or more, 70% or more, 80% or more, or 90% or more by area of the exterior surface of the water-soluble substrate. The powder coating can be applied by any known technique such as spray coating or passing the water-soluble substrate through a falling curtain of powder coating composition.

The powder coating, when present, may be applied to the exterior surface of the water-soluble substrate at a rate of 0.5 to 10 mg per 100 cm², in some embodiments not more than 5 mg per 100cm², and in further embodiments in the range of 1.25 to 2.5 mg per 100 cm². Alternatively, the powder coating is applied to or present on the exterior surface of the water-soluble substrate in an amount of 100 ppm or more, preferably 200 ppm or more, more preferably 300 ppm or more, based on the weights of the powder coating and the water-soluble substrate. For example, a 1 mg of powder coating may be applied to a 1 g water-soluble substrate to provide a 1000 ppm coating on the substrate. In certain embodiments, the powder coating is applied to or present on the exterior surface of the water-soluble substrate in a range of 100 to 5000 ppm, preferably 200 to 3000 ppm, more preferably 300 to 2000 ppm.

The powder coating, when present, can include 10 wt.% or more of a powdered lubricating agent based on the total weight of the powder coating. Typical powdered lubricating agents include oligosaccharide, polysaccharide and inorganic lubricating agents. The powdered coating may include one or more of the group selected from starch, modified starches (including, but limited to, corn starch, potato starch or hydroxyethyl starch) silicas, siloxanes, calcium carbonate, magnesium carbonate, clay, talc, silicic acid, kaolin, gypsum, zeolites, cyclodextrins, calcium stearate, zinc stearate, alumina, magnesium stearate, sodium sulphate, sodium citrate, sodium tripolyphosphate, potassium sulphate, potassium citrate, potassium tripolyphosphate and zinc oxide. In a preferred embodiment, the powdered lubricating agent includes talc.

In some embodiments, the powdered lubricating agent forms 25 wt.% or more, 30 wt.% or more, 35 wt. % or more, 40 wt.% or more, or 45 wt.% or more of powder coating based on the total weight of the powder coating. In some embodiments, the powdered lubricating agent forms 95 wt.% or less, 90 wt. % or less, 85 wt.% or less, 80 wt.% or less, or 75 wt.% or less of the powder coating based on the total weight of the powder coating. In certain embodiments, the powdered lubricating agent forms in the range of 25 to 95 wt.%, 30 to 90 wt.%, 35 to 85 wt.%, 40 to 80 wt.%, or 45 to 75 wt.% of the powder coating based on the total weight of the powder coating. In alternative embodiments, the powdered lubricating agent forms 50 wt.% or more, 60 wt.% or more, or 70 wt.% or more of the powder coating based on the total weight of the powder coating.

The powdered lubricating agent may have an average particle diameter of at least about 0.1 microns. The powdered lubricating agent may have an average particle diameter of about 200 microns or less. In some embodiments, the powdered lubricating agent has an average particle diameter in the range of about 0.1 to 100 microns, in other embodiments in the range of about 0.1 to 20 microns and in further embodiments in the range of about 5 and 15 microns. Average particle diameter can be measured by known optical imaging techniques.

When a bittering agent is included in a powder coating, the powdered bittering agent may be a powdered form of any one of the bittering agents described herein. In preferred embodiments, the powdered bittering agent is selected from a powdered form of denatonium benzoate, denatonium saccharide, quinine or a salt of quinine.

The powdered bittering agent may form 5 wt.% or more of the powder coating based on the total weight of the powder coating. In some embodiments, the powdered bittering agent forms 10 wt.% or more, 15 wt.% or more, 20 wt. % or more, or 25 wt.% or more of powder coating based on the total weight of the powder coating. In some embodiments, the powdered bittering agent forms 75 wt.% or less, 70 wt. % or less, 65 wt.% or less, 60 wt.% or less, or 55 wt.% or less of the powder coating based on the total weight of the powder coating. In further embodiments, the powdered bittering agent forms 5 to 75 wt.%, 10 to 70 wt.%, 15 to 65 wt.%, 20 to 60 wt.%, or 25 to 55 wt.% of the powder coating based on the total weight of the powder coating. In alternative embodiments, the powdered bittering agent forms 50 wt.% or less, 40 wt.% or less, 30 wt.% or less of the powder coating based on the total weight of the powder coating. In these embodiments, it is advantageous to include a relatively low amount of powdered bittering agent in the powder coating while maintaining a bitter taste when a user tries to ingest the water-soluble package.

The powdered bittering agent may have an average particle diameter of at least about 0.1 microns. The powdered bittering agent may have an average particle diameter of about 200 microns or less. In some embodiments, the powdered bittering agent has an average particle diameter of in the range of about 0.1 to 100 microns, in other embodiments in the range of about 0.1 to 20 microns and in further embodiments in a range of about 5 and 15 microns. Average particle diameter can be measured by known optical imaging techniques. For example, the diameter of all particles within a fixed area under a microscope (or other optical imaging device) can be measured and the mean diameter calculated. The diameter can be taken as the major dimension for irregularly shaped particles.

When the water-soluble package includes a powder coating including a powdered bittering agent, the water-soluble package may further include a bittering agent included within the water-soluble substrate.

In some embodiments, the powder coating consists essentially of a powdered bittering agent or a powdered lubricating agent.

In some embodiments, the powder coating further includes one or more additional active agents. The additional active agent may be selected from one or more of the group of enzymes, oils, odour absorbers, fragrances, bleaches, bleach components, cleaning polymers, soil release polymers, EPEI, water softeners, dyes and fabric softeners.

The capsules described herein are suitable for use in a substrate treatment method, suitably a laundry or machine dish washing method. Thus, a further aspect of the present invention provides use of capsules as described herein in a method of cleaning, suitably a laundry or machine dish washing method. Suitably the method includes opening the packaging by unlocking the child resistent closure, retrieving one or more capsules from the packaging, placing the capsule/s in the drum or dosing drawer or any dosing device of a washing machine prior to commencement of a wash cycle.

The capsules are particularly suitable for use in (substrate) washing machines and in dishwashing machines amongst other applications. They can also be used in manual laundry or dishwashing operations. In use the capsules according to the invention are preferably, and conveniently, placed directly into the liquid which will form the wash liquor or into the area where this liquid will be introduced. The capsule dissolves on contact with the liquid, thereby releasing the detergent composition from the separate compartments and allowing them to form the desired wash liquor.

Preferably, the capsule ruptures between 10 seconds , preferably between 30 seconda and 5 minutes once the unit dose article has been added to 950ml of deionised water at 20-21 °C in a 1L beaker, wherein the water is stirred at 350rpm with a 5cm magnetic stirrer bar. By rupture, we herein mean the film is seen to visibly break or split. Shortly after the film breaks or splits the internal liquid substrate composition may be seen to exit the article into the surrounding water.

A number of proposals and aspects are described herein, which proposals and aspects are intended to be combined to achieve improved or cumulative benefits. Thus, any one aspect may be combined with any other aspect. Similarly the optional features associated with any one of the aspects may apply to any one of the other aspects.

Referring to the drawings, packaging according to the invention is shown. Twenty (20) multi-compartment water soluble capsules (not shown) produced by a process of thermoforming as described above are stacked in. 20 of these capsules are packed into a rigid carton 1 having a box construction and providing a receptacle 3 and hinged closure 5.

The carton comprises a stiff cellulose based, biodegradable paperboard having grammage 225 or above to achieve a minimum compression strength of 300N. This is tested by compressing the box between two plates until the box is crushed. The maximum load (before crushing is recorded). The packaging design has 4 pairs of locking members 7, 9, 11,13 each comprising a tab on the receptacle 3 and a recess on the lid 5. Pair 7 is arranged separated from pairs 11 and 13 by a distance corresponding to the average span between a thumb and forefinger of the hand of an adult. Likewise each pair is separated from 2 of the other pairs by such a distance. Only when all both pairs are released simultaneously it is possible to open the lid of the packaging container. The distance of each pair of locking elements and arrangement on the corners is such that it is impossible for a child can press all four locking elements simultaneously. The rigidity of the packaging ensures that the locking members of each pair are aligned during closure to render the packaging unaccessible to children. The rigidity is protected by the capsules which are as follows.

The water soluble capsules comprise laundry treatment compositions dispensed to each of the three compartments is as follows:

| *Compartment #1* | *Compartment 2* | *Side compartment #2* |
|---|---|---|
| Surfactant | Surfactants | Surfactants |
| Polymer cleaning | Polymer cleaning | Polymer cleaning |
| Sequestrant | Sequestrant | Sequestrant |
| Water | Enzyme -cellulase | Enzyme - protease |
| Hydroptrope | Fluorescer | Water 8%wt. |
| Opacifier | Water 8%wt | Hydrotrope |
| | Hydrotrope | Dyes |
| | Dyes | |
| | Perfume | |

The viscosity is modulated to be within a viscosity range of 350 -1000 mPa.s at 25°C at a shear rate of 21 sec⁻¹.

With such a viscosity the filling procedure is protective of the seal and leaking via imperfect seals is reduced. With leakage minimized, the package is less likely to become in contact with the substrate treatment formulation.

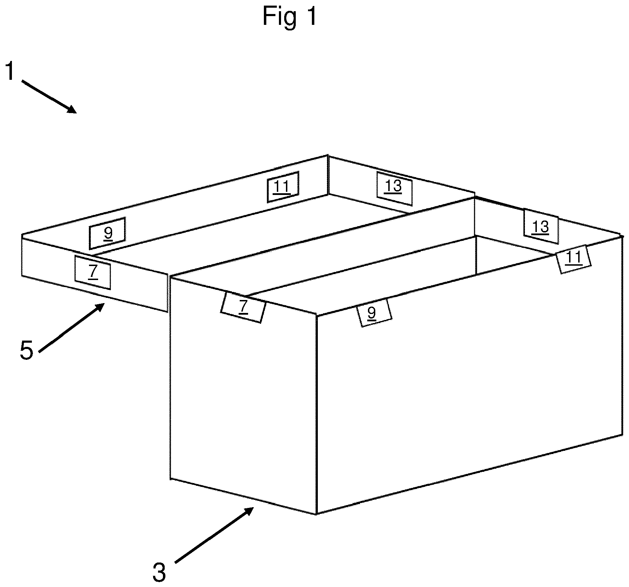

## Claims

1. A substrate treatment product comprising a package comprising at least one layer of fibrous or pulp material and at least one layer of a polymeric material selected from polylactic acid, polyhydroxyalkanoate, a polyester, polyvinyl alcohol, polybutylenadipate terephthalate, a cellulose based material, a starch based material, a sugar cane based material and mixtures thereof, and the packaging containing a plurality of water-soluble capsules, each water-soluble capsule comprising a substrate treatment composition within a sealed compartment which is filled to at least 60% of the volume of the compartment, the package comprising (i) a receptacle containing 10 or more of said water soluble capsules and a closure; (ii) a child resistent closure mechanism; wherein the substrate treatment composition has a viscosity in the range 200 mPa.s - 2000 mPa.s at 25°C at a shear rate of 21 sec⁻¹, wherein the water soluble capsule comprises a water soluble film comprising polyvinyl alcohol, a modified polyvinyl alcohol, polyvinyl acetate, carboxymethylcellulose or hydroxypropyl methyl cellulose and wherein the water content of the substrate treatment composition is in the range 0.01 - 15%wt. based on the total weight of the composition.

2. A substrate treatment product according to claim 1 wherein the substrate treatment composition has a viscosity in the range 250 mPa.s - 1000 mPa.s at 25°C at a shear rate of 21 sec⁻¹.

3. A substrate treatment product according to any preceding claim wherein the substrate treatment composition is filled to at least 90% of the volume of the compartment.

4. A substrate treatment product according to any preceding claim wherein the capsule further comprises an internal seal which partitions the capsule to provide said at least two compartments.

5. A substrate treatment product according to any preceding claim wherein the capsule film is from 40 to 150 micrometer thick.

6. A substrate treatment product according to any preceding claim wherein the capsule comprises a bittering agent.

7. A substrate treatment product according to any preceding claim wherein the capsule is thermoformed.

8. A substrate treatment product according to any preceding claim wherein the substrate treatment composition comprises one or more enzymes.

9. A substrate treatment product according to any preceding claim wherein the substrate treatment composition comprises a bleach system.

10. A substrate treatment product according to any preceding claim wherein the substrate treatment composition comprises a polymeric thickener.

11. A substrate treatment product according to any preceding claim wherein the receptacle and closure each incorporate at least two locking members, and the package is closed by the locking of mulitple pairs of locking members.

## Patentansprüche

1. Substratbehandlungsprodukt, umfassend eine Verpackung, umfassend mindestens eine Schicht von Faser- oder Zellstoffmaterial und mindestens eine Schicht eines polymeren Materials, ausgewählt aus Polymilchsäure, Polyhydroxyalkanoat, einem Polyester, Polyvinylalkohol, Polybutylenadipat-terephthalat, einem Material auf Cellulosebasis, einem Material auf Stärkebasis, einem Material auf Zuckerrohrbasis und Mischungen davon, und wobei die Verpackung eine Vielzahl von wasserlöslichen Kapseln enthält, wobei jede wasserlösliche Kapsel eine Substratbehandlungszusammensetzung in einer verschlossenen Kammer umfasst, die zu mindestens 60% des Volumens der Kammer gefüllt ist, wobei die Verpackung (i) einen Behälter, der 10 oder mehr wasserlösliche Kapseln und einen Verschluss enthält, (ii) einen kindergesicherten Verschlussmechanismus umfasst, wobei die Substratbehandlungszusammensetzung eine Viskosität in dem Bereich von 200 mPa.s - 2000 mPa.s bei 25°C bei einer Scherrate von 21 sec⁻¹ umfasst, wobei die wasserlösliche Kapsel einen wasserlöslichen Film umfasst, umfassend Polyvinylalkohol, einen modifizierten Polyvinylalkohol, Polyvinylacetat, Carboxymethylcellulose oder Hydroxypropylmethylcellulose, und wobei der Wassergehalt der Substratbehandlungszusammensetzung in dem Bereich von 0,01 - 15 Gew.-%, bezogen auf das Gesamtgewicht der Zusammensetzung, liegt.

2. Substratbehandlungsprodukt nach Anspruch 1, wobei die Substratbehandlungszusammensetzung eine Viskosität in dem Bereich von 250 mPa.s - 1000 mPa.s bei 25°C bei einer Scherrate von 21 sec⁻¹ aufweist.

3. Substratbehandlungsprodukt nach irgendeinem vorhergehenden Anspruch, wobei die Substratbehandlungszusammensetzung zu mindestens 90% des Volumens der Kammer eingefüllt ist.

4. Substratbehandlungsprodukt nach irgendeinem vorhergehenden Anspruch, wobei die Kapsel ferner eine innere Dichtung umfasst, die die Kapsel unterteilt, um mindestens zwei Kammern zu schaffen.

5. Substratbehandlungsprodukt nach irgendeinem vorhergehenden Anspruch, wobei der Kapselfilm 40 bis 150 Mikrometer dick ist.

6. Substratbehandlungsprodukt nach irgendeinem vorhergehenden Anspruch, wobei die Kapsel einen Bitterstoff umfasst.

7. Substratbehandlungsprodukt nach irgendeinem vorhergehenden Anspruch, wobei die Kapsel thermogeformt ist.

8. Substratbehandlungsprodukt nach irgendeinem vorhergehenden Anspruch, wobei die Substratbehandlungszusammensetzung ein oder mehrere Enzyme umfasst.

9. Substratbehandlungsprodukt nach irgendeinem vorhergehenden Anspruch, wobei die Substratbehandlungszusammensetzung ein Bleichsystem umfasst.

10. Substratbehandlungsprodukt nach irgendeinem vorhergehenden Anspruch, wobei die Substratbehandlungszusammensetzung ein polymeres Verdickungsmittel umfasst.

11. Substratbehandlungsprodukt nach irgendeinem vorhergehenden Anspruch, wobei der Behälter und der Verschluss jeweils mindestens zwei Verschlusselemente einbeziehen und die Verpackung durch das Verschließen von mehreren Paaren von Verschlusselementen geschlossen wird.

## Revendications

1. Produit de traitement de substrat comprenant un emballage comprenant au moins une couche de matériau fibreux ou de pâte et au moins une couche d'un matériau polymère choisi parmi un poly(acide lactique), polyhydroxyalcanoate, polyester, poly(alcool vinylique), polybutylèneadipate téréphtalate, un matériau à base de cellulose, un matériau à base d'amidon, un matériau à base de canne à sucre et des mélanges de ceux-ci, et l'emballage contenant plusieurs capsules solubles dans l'eau, chaque capsule soluble dans l'eau comprenant une composition de traitement de substrat avec un compartiment scellé qui est rempli jusqu'au moins 60 % du volume du compartiment, l'emballage comprenant (i) un réceptacle contenant 10 ou plus desdites capsules solubles dans l'eau et une fermeture ; (ii) un mécanisme de fermeture sécurité enfant ; dans lequel la composition de traitement de substrat présente une viscosité dans l'intervalle 200 mPa.s - 2 000 mPa.s à 25°C à une vitesse de cisaillement de 21 s⁻¹, dans lequel la capsule soluble dans l'eau comprend un film soluble dans l'eau comprenant un poly(alcool vinylique), un poly(alcool vinylique) modifié, un poly(acétate de vinyle), une carboxyméthylcellulose ou hydroxypropylméthylcellulose et dans lequel la teneur en eau de la composition de traitement de substrat se trouve dans l'intervalle de 0,01 - 15 % en masse sur la base de la masse totale de la composition.

2. Produit de traitement de substrat selon la revendication 1, dans lequel la composition de traitement de substrat présente une viscosité dans l'intervalle 250 mPa.s - 1 000 mPa.s à 25°C à une vitesse de cisaillement de 21 s⁻¹.

3. Produit de traitement de substrat selon l'une quelconque des revendications précédentes, dans lequel la composition de traitement de substrat est chargée à au moins 90 % du volume du compartiment.

4. Produit de traitement de substrat selon l'une quelconque des revendications précédentes, dans lequel la capsule comprend de plus un scellement interne qui divise la capsule pour fournir lesdits au moins deux compartiments.

5. Produit de traitement de substrat selon l'une quelconque des revendications précédentes, dans lequel le film de capsule est d'épaisseur de 40 à 150 micromètres.

6. Produit de traitement de substrat selon l'une quelconque des revendications précédentes, dans lequel la capsule comprend un agent amérisant.

7. Produit de traitement de substrat selon l'une quelconque des revendications précédentes, dans lequel la capsule est thermofaçonnée.

8. Produit de traitement de substrat selon l'une quelconque des revendications précédentes, dans lequel la composition de traitement de substrat comprend une ou plusieurs enzymes.

9. Produit de traitement de substrat selon l'une quelconque des revendications précédentes, dans lequel la composition de traitement de substrat comprend un système blanchissant.

10. Produit de traitement de substrat selon l'une quelconque des revendications précédentes, dans lequel la composition de traitement de substrat comprend un épaississant polymère.

11. Produit de traitement de substrat selon l'une quelconque des revendications précédentes, dans lequel les réceptacle et fermeture incorporent chacun au moins deux éléments de verrouillage, et l'emballage est fermé par le verrouillage de multiples paires d'éléments de verrouillage.
